(19) Europäisches Patentamt / European Patent Office / Office européen des brevets

(11) **EP 2 610 753 B1**

(12) **EUROPEAN PATENT SPECIFICATION**

(45) Date of publication and mention
of the grant of the patent:
**05.10.2016 Bulletin 2016/40**

(51) Int Cl.:
***G06F 11/36*** *(2006.01)*

(21) Application number: **11010235.7**

(22) Date of filing: **27.12.2011**

(54) **Method and apparatus for fast tracing in target systems**

Verfahren und Vorrichtung zur Echtzeit-Ablaufverfolgung in einem Zielsystem

Procédé et dispositif pour tracer en temps réel dans un système cible

| | |
|---|---|
| (84) Designated Contracting States: **AL AT BE BG CH CY CZ DE DK EE ES FI FR GB GR HR HU IE IS IT LI LT LU LV MC MK MT NL NO PL PT RO RS SE SI SK SM TR** | (72) Inventor: **Hraibi, Karim 47279 Duisburg (DE)** |
| (43) Date of publication of application: **03.07.2013 Bulletin 2013/27** | (74) Representative: **Eisenführ Speiser Patentanwälte Rechtsanwälte PartGmbB Postfach 31 02 60 80102 München (DE)** |
| (73) Proprietor: **CommAgility Limited Holywell Park Loughborough LE11 3AQ (GB)** | (56) References cited: **JP-A- 10 003 411     US-A1- 2004 250 164 US-A1- 2008 250 275** |

**Description**

FIELD OF THE INVENTION

The present invention relates to a method, apparatus and computer program product for tracing information about program execution flows.

BACKGROUND OF THE INVENTION

Software is complex and can be very difficult to understand. Maintenance of software systems often requires some level of reverse engineering as developers investigate source code in order to understand their software. Unfortunately language features such as polymorphism or late binding limit the expressive power of source code and static analysis. Dynamic techniques such as execution traces help to address these problems. Execution traces offer the advantage that they report precisely the actions of a program at runtime.

Hence, in order to ease software implementation and debugging, real-time embedded software systems require a means for tracing information about the program execution flow. The trace output must be in the form of human-readable text. In order not to interfere with the real-time operation of the system, the processor cycle overhead caused by tracing must be minimal. The bandwidth that is required for transporting the trace information out of the embedded system and the amount of memory that is used for storing the trace logs must be minimized as well.

A common way of printing full-text output is using standard output functions that are provided by the various programming languages. E.g., a typical standard output function is the *printf()*-function that is provided by ANSI C which refers to a family of successive standards published by the American National Standards Institute (ANSI) for the C programming language. These functions tend to be slow because they perform text formatting operations in line with the real-time software execution. Further, the output of such functions is a stream of text characters that needs to be transmitted in real-time through a medium of a potentially limited throughput, such as a standard test access port and boundary-scan architecture according to the Joint Test Action Group (JTAG) or a network architecture (e.g. Ethernet).

A conventional approach of real-time tracing is the use of slow standard output functions provided by most integrated development environments (IDEs) and compensation of their slowness by reducing data throughput of the real-time system while the traces are activated. Taking the tradeoff of a system that is unable to provide traces when operating at full load.

Another conventional approach is to provide a set of fast-tracing functions which application programming interface (API) differs significantly from the one of the standard output functions, hence requiring software developers to go through a learning curve. Most of these APIs require the maintenance of a separate string table that maps the character strings to message codes to be passed to the API.

The JP 10 003411 A discloses an information storage method in real-time trace mode adapted to quickly retrieve information on a necessary execution history and also to reduce the hardware resources by storing only address data of the information data on the necessary execution history into a real-time trace memory. A source separation program retrieves a source program and separates a character string that is designated by a key word from other character strings. Then, the address data on the designated character string are stored in the real-time trace memory only when the address data are coincident with the designated address data stored in a designated address memory.

SUMMARY

It is an object of the present invention to provide a tracing method and system capable of providing developers with the same familiar interface of standard output functions, while offering processor usage and throughput requirements that are low enough to make them suitable for use within a real-time embedded software system.

This object is achieved by a method for the embedded function and the host function as claimed in claim 1 by a system as claimed in claim 6, respectfully, and by a computer program product as claimed in claim 13.

Accordingly, processor cycle requirements can be reduced by moving all text-formatting operations out of the real-time code into an offline trace viewer application. Typically, 15 cycles for a 1-parameter message and 30 cycles for a 3-parameter message can be achieved. Additionally, bandwidth or throughput requirements on the transmission or transport medium are reduced by transmitting the memory addresses of the strings of characters instead of transmitting the strings themselves. Moreover, memory size required for trace log storage is reduced by storing the string addresses instead of the strings themselves. In general, buffer management and trace message writing can be implemented at reduced complexity.

Thereby, a substitute for standard output functions is provided. This substitute can be adapted to provide developers with the same familiar interface of the standard output functions and its processor usage and throughput requirements are low enough to make it suitable for use within a real-time embedded system. The memory addresses can thus be generated in real-time with the program execution flow. Implementation of familiar application programming interfaces (APIs) that mimic the standard output functions used in common programming languages can thus be achieved.

The logging and viewing application can be provided at a host device, wherein the predetermined number of the stored memory addresses can be supplied via a hardware interface from an embedded system to the host device.

Furthermore, the memory addresses can be stored as part of respective trace messages each including a trace message type and a parameter.

Additionally, the buffer memory may be configured as a ring buffer. It could be adapted to have a size which can be expressed as a power of two, to thereby facilitate buffer management. As a further option, the address generation means may be adapted to access the buffer memory with a write pointer having its most significant bits masked. A very robust buffer management (e.g. ring buffer) can thereby be achieved for speed and thread safety without using memory protection.

The address generation means may be adapted to increment the write pointer before writing a memory address to the buffer memory. This reduces the risk of collisions by simultaneous access.

The above apparatuses may be implemented as hardware circuits integrated on a single chip or chip set, or wired on a circuit board. As an alternative, at least parts of the apparatuses may be implemented as a software program or routine controlling a processor or computer device. As an example, the software program or routine may be implemented in C type programming language.

Other advantageous modifications are defined in the dependent claims.

## BRIEF DESCRIPTION OF THE DRAWINGS

The invention will now be described in greater detail based on embodiments with reference to the accompanying drawings in which:

Fig. 1 shows a schematic block diagram of a tracing system according to various embodiments;

Fig. 2 shows a buffer arrangement and trace message format in a first embodiment;

Fig. 3 shows the buffer arrangement of the first embodiment and its reading structure;

Fig. 4 shows a flow diagram of a buffer writing scheme according to a second embodiment;

Fig. 5 shows a flow diagram of a output scheme for outputting trace information according to a third embodiment; and

Fig. 6 shows a schematic block diagram of an alternative software-based implementation according to a fourth embodiment.

## DESCRIPTION OF THE EMBODIMENTS

In the following, embodiments of the present invention will be described based on an embedded tracing system that generates real-time trace messages to be saved on a host personal computer (PC).

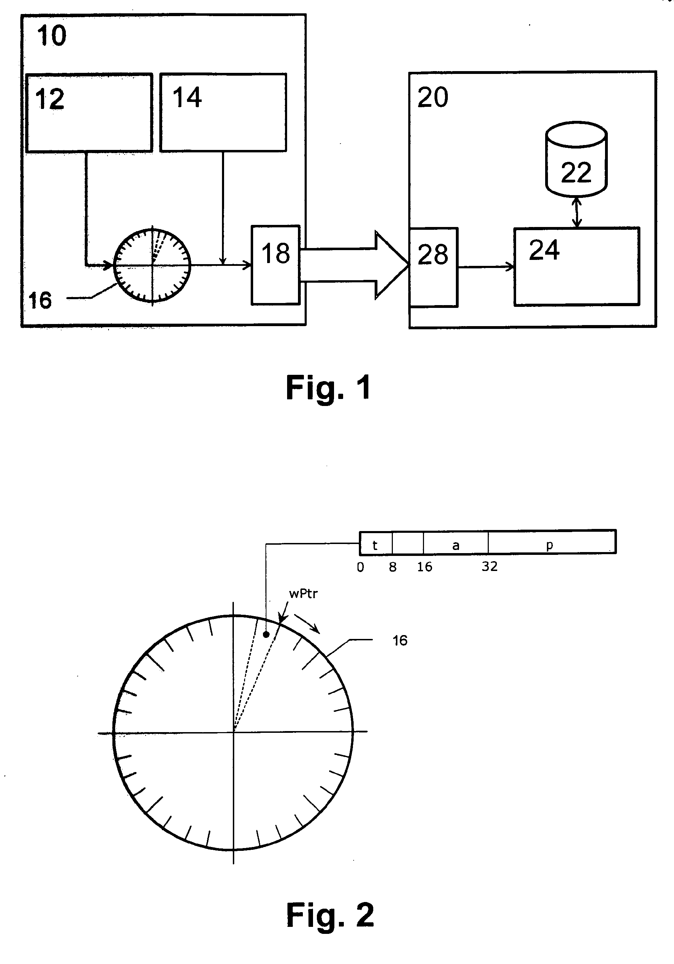

Fig. 1 shows a schematic block diagram of the tracing system according to various embodiments.

On the embedded system 10, one or more real-time functions or units 12 are adapted to generate a trace output that is stored into a ring buffer 16. A low-priority function or unit 14 continuously monitors the fill status of the ring buffer 16. Once there is enough data accumulated in the ring buffer 16, the low priority unit 14 will trigger a transmission of one or any other predetermined number of data packets over a hardware interface 18 towards the hardware interface 28 of a host PC 20 or other host system. Thereby, the ring buffer 16 can be prevented form overflowing by continuously draining it.

The above units 12, 14 may be implemented as software tasks which can be execution paths through an address space of a computer or processor system. In other words, they can be a set of program instructions that are loaded in a memory of the computer or processor system. Address registers of the computer or processor system have been loaded with an initial address of the program. At the next clock cycle, a processor (e.g. central processing unit (CPU)) of the computer or processor system can start execution, in accordance with the stored program.

On the host PC 20, a trace logging/viewing application or unit 24 captures the trace data stream received via the hardware interfaces 18, 28 and saves it to a fixed or removable memory 22 (e.g. disk) in real-time. Upon user request, the trace logging/viewing application 24 converts the trace messages to a human-readable format and displays them on a screen (not shown).

It is noted that the real-time unit 12, low priority-unit 14, and trace logging/viewing application 24 may be implemented as discrete signal processing circuits or, alternatively, as tasks, threads or software routines.

Fig. 2 shows a layout of the ring buffer 16 that is used in a first embodiment for storing the trace data within the embedded system 10. The size of the memory location that is used for storing one trace message is expressed in powers of two. The following formula can be used to calculate the trace message size in bytes:

$$msgSize = 2 \char`\^ msgExp \qquad\qquad (1)$$

where *msgSize* denotes the size of the trace message in bytes, wherein one byte consists of 8 binary digits (bits) and *msgExp* denotes the exponent for calculating the power of two.

In Fig. 2, a case is shown where *msgExp = 3*. This results in a message size or length of 8 bytes (64 bits). Such a trace message may consist of a bit field that stores the following values, wherein the "offset" denotes the bit position where the binary pattern of the concerned value begins in the bit field:

- Offset 0: trace message type *t*, used by the trace viewer application to correctly identify and interpret the trace message,

- Offset 8: reserved,

- Offset 16: string address *a*, i.e. memory address, used by the trace logging/viewing unit 24 to recover or retrieve readable information of the trace messages from binary image data,

- Offset 32: parameter *p*, used to transmit a 32-bit variable value.

Thus, according to the embodiments, the trace message does not include any information readable for the user, but only address information for later retrieval of such readable information.

In an alternative case of *msgExp = 4* the message size is 16 bytes (128) bits. The additional 8 bytes shall be used to store two further 32-bit parameters.

Furthermore, in some embodiments, a memory location that is used to accommodate or implement the ring buffer 16 can be selected to have its size expressed in powers of two. The following equation (2) gives the trace buffer size expressed in trace messages:

$$bufSizeMsg = 2 \char`\^ bufExp \qquad\qquad (2)$$

wherein *bufSizeMsg* denotes the buffer size expressed in trace messages and *bufExp* denotes the exponent for calculating the power of two.

Fig. 2 shows an exemplary case where *bufExp = 5*, resulting in a trace buffer size that can accommodate 32 trace messages. The size of the ring buffer 16 can be expressed by:

$$bufSize = 2 \char`\^ (bufExp + msgExp) \qquad\qquad (3)$$

wherein *bufSize* denotes the buffer size expressed in bytes.

A write pointer *wPtr* is used as an address which points to the location of the ring buffer 16 where the next trace message with its memory address *a* will be written. The fact that the size of the ring buffer can always be expressed by powers of two allows avoiding the usage of a conditional statement (e.g. if statement in ANSI C) for resetting the write pointer *wPtr* at the point where the ring buffer wraps around. Instead, the most significant bits of *wPtr* can be masked (e.g. by using a bitwise AND operation) and the unmasked bits are allowed to naturally wrap to zero. The following equation (4) expresses the number of unmasked bits of the write pointer *wPtr* for a particular type of the ring buffer 16:

$$numBits = bufExp + msgExp \qquad\qquad (4)$$

wherein *numBits* denotes the number of bits of the write pointer *wPtr*.

The achieved avoidance of the usage of conditional statements and use of the natural wrap-around property of binary numbers leads to the advantage that the number of CPU cycles used for writing a trace message can be reduced, since a bit-masking operation requires fewer cycles than a conditional statement. Furthermore, a thread-safe operation can be achieved. If two threads simultaneously attempt to increment the write pointer *wPtr,* there is no risk in producing a buffer overflow by having one thread writing a message beyond the boundaries of the ring buffer. This is due to the fact that all the possible values of the bit-masked write pointer *wPtr* point to valid ring buffer slots.

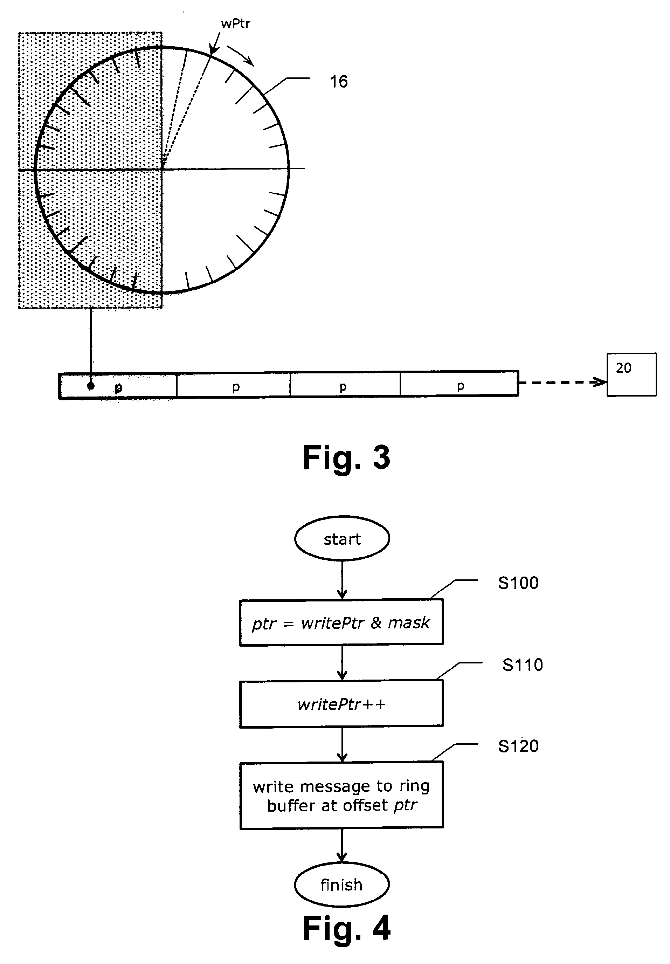

Fig. 3 shows a mechanism of draining or reading the ring buffer 16 in real-time according to the first embodiment. As already mentioned above, the low-priority unit 14 monitors the fill level of the ring buffer 16. It is adapted to trigger a data packet p to be transmitted over the transmission medium as soon as a predetermined sub-portion (i.e. sub-buffer) of the ring buffer 16 gets full. In other words, if a predetermined fill level has been reached. In the example shown in Fig. 3, a hatched sub-buffer is selected to cover one of the two halves of the ring buffer. That is, the predetermined fill level corresponds to one half of the buffer capacity.

Fig. 4 shows a flow diagram of a process of writing a trace message according to a second embodiment. In step S100 a bit-masked value of the write pointer *wPtr* is calculated. Then, in step S110, the write pointer *wPtr* is incremented. As a last step S 120, the message data (i.e. trace message with memory address a) is written into a slot or memory location of the ring buffer 16, e.g. as shown in Fig. 2, corresponding to the result of the bit-masking operation.

The write pointer *wPtr* can be left unprotected in order to reduce CPU cycle usage. In case two separate threads attempt to simultaneously increment the value of the write pointer *wPtr,* both of them will end-up writing into the same slot of the ring buffer 16, which would result in the loss of one trace message. However, this drawback is considered to be a reasonable tradeoff due to the low probability of such an event.

The fact that the write pointer *wPtr* is incremented first thing before writing the trace message reduces the probability of message loss due to access by simultaneous threads. In order for the loss to occur, the bit-masking operation of the first thread must occur between the bit-masking and increment operations of the second thread.

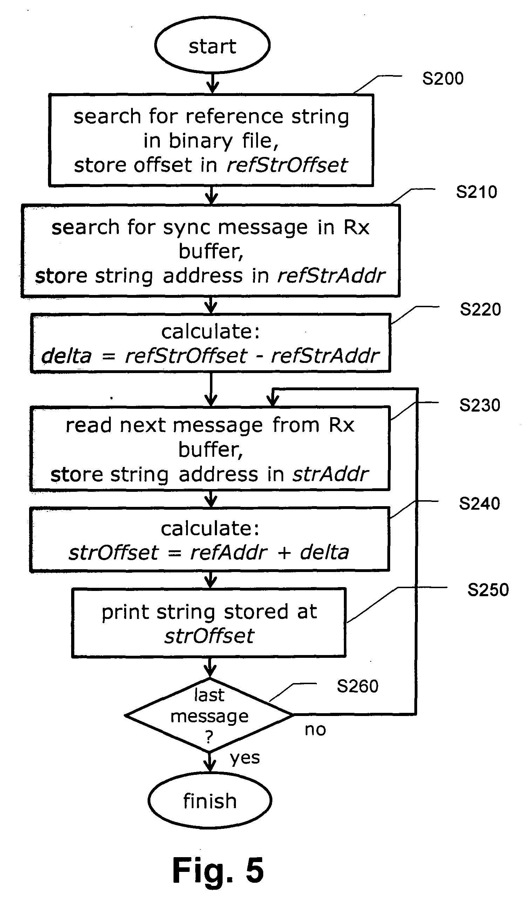

Fig. 5 shows the flowchart of a process of displaying the trace output according to a third embodiment. The host PC 20 uses binary image data of a binary executable image (e.g. a binary file in Executable and Linkable Format (ELF)) that is used on the embedded system 10 in order to recover character strings of the content of the trace message from the memory addresses a received in the trace messages supplied via the hardware interface 28. Further details concerning ELF can be gathered for example from Tool Interface Standard (TIS), "Executable and Linking Format (ELF) Specification Version 1.2" (May 1995), or from Gordon, Ryan: "fatelf-specification v1", http://hg.icculus.org/icculus/fatelf/rawfile/tip/docs/fatelf-specification.txt.

A special synchronization message is periodically transmitted by the embedded real-time system 10. This message contains the memory address of a unique character sequence whose offset in the executable image can be found by the trace logging/viewing unit 24. In a first step S200, the trace logging/viewing unit 24 searches for the reference string in the binary file of the executable image and stores its offset as an offset parameter *refStrOffset.* The binary file may be stored in the memory 22. In the next step S210, the trace logging/viewing unit 24 searches in a trace buffer of the memory 22 which stores received packets of trace messages from the ring buffer 16 for the synchronization message and stores its string address as a reference address *refStrAddr.* Then, in step S220, it calculates the difference (*delta*) between the offset parameter and the reference address and uses the result to calculate in step S240 the offsets of further strings within the executable image, which correspond to trace messages read from the trace buffer in step S230. In the next step S250, the strings are formatted and printed using standard output functions. Steps S230 to S250 are repeated until it is determined in step S260 that the last trace message of the trace buffer has been processed.

Thereby, the memory addresses generated by the embedded system 10 can be converted into readable trace information which can be output and read by the user.

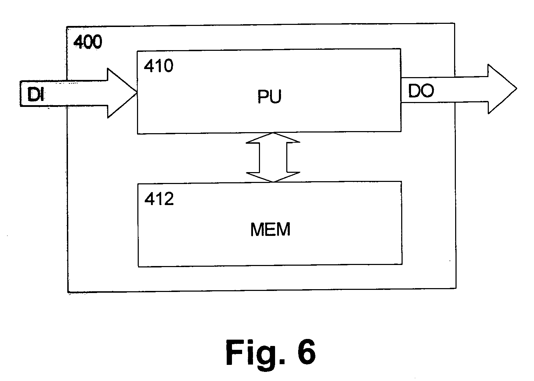

Fig. 6 shows a schematic block diagram of an alternative software-based implementation according to a third embodiment. The required functionalities can be implemented in the embedded system 10 and/or in the host PC 20 with a processing unit 410, which may be any processor or computer device with a control unit which performs control based on software routines of a control program stored in a memory 412. The control program may also be stored separately on a computer-readable medium. Program code instructions are fetched from the memory 412 and are loaded to the control unit of the processing unit 410 in order to perform the processing steps of Figs. 4 and 5, which may be implemented as the above mentioned software routines. The processing steps may be performed on the basis of input data DI and may generate output data DO. In case of the embedded system 10, the input data DI may correspond to trace information generated by the real-time unit 12, and the output data DO may correspond to the trace messages stored in the ring buffer 16 or to the packets p output via the hardware interface 18. In case of the host PC 20, the input data DI may correspond to trace messages received via the hardware interface 28, and the output data DO may correspond to the retrieved readable trace information to be output to the user.

Consequently, the functionalities of the above embodiments may be implemented as a computer program product comprising code means for generating each individual step of the frame alignment procedure when run on a computer device or data processor of the respective entity.

In summary, a method and apparatus for tracing information about a program execution flow has been described, wherein memory addresses of character strings of a trace output are generated and stored in a buffer memory. A supply of a predetermined number of the stored memory addresses to a trace logging and viewing unit is triggered when a predetermined fill level of the buffer memory has been reached. At the trace logging and viewing unit, the trace output including the memory addresses of the character strings is searched for a string address of a synchronization message and a difference between the string address and an offset of a reference string is calculated. Then, a readable format of the trace output is retrieved by using the calculated difference to access binary image data.

It is apparent that the invention can easily be extended to any software environment which may include a collection of hardware and software technologies where some or all of the operating functions are implemented through modifiable software or firmware operating on programmable processing technologies. Such devices include field programmable gate arrays (FPGAs), DSPs, general purpose processors (GPPs), programmable System on Chip (SoC) or other application specific programmable processors. The use of these technologies allows new wireless features and capabilities to be added to existing radio systems without requiring new hardware.

The proposed embodiments can be implemented in connection with any tracing system and any addressable file, database or lookup table for storing the characters or images of the readable trace information. The embodiments may thus vary within the scope of the attached claims.

## Claims

1. A method of tracing information about a program execution flow, said method comprising:

   a. generating memory addresses of character strings of a trace output which provides said information about the program execution flow and storing them in a buffer memory (16);
   b. monitoring a fill status of said buffer memory (16);
   c. triggering a supply of a predetermined number of said stored memory addresses to a trace logging and viewing application (24) when a predetermined fill level of said buffer memory (16) has been reached;
   d. receiving at said trace logging and viewing application (24) from said buffer memory (16) a trace output including memory addresses of character strings;
   e. searching through the trace output for a string address of a synchronization message;
   f. calculating a difference between said string address and an offset of a reference string corresponding to said string address in a binary image data of said program ; and
   g. obtaining a readable format of said trace output at said trace logging and viewing application (24) by using said calculated difference to access said binary image data.

2. The method according to claim 1, further comprising generating said memory addresses in real-time with said program execution flow.

3. The method according to claim 1 or 2, further comprising providing said logging and viewing application (24) at a host device (20) and supplying said predetermined number of said stored memory addresses via a hardware interface (18, 28) from an embedded system (10) to said host device (20).

4. The method according to any one of the preceding claims, further comprising storing said memory addresses as part of respective trace messages each including a trace message type and a parameter.

5. The method according to claim 1, wherein said binary image date is provided in an executable and linkable format.

6. A system for tracing information about a program execution flow, said system comprising:

   a. a buffer memory (16);
   b. address generation means (12) for generating memory addresses used for obtaining character strings of a trace output which provides said information about the program execution flow and for storing said memory addresses in said buffer memory (16);
   c. monitoring means (14) for monitoring a fill status of said buffer memory (16);
   d. trigger means (14) for triggering a supply of a predetermined number of said stored memory addresses to a trace logging and viewing means (24) when a predetermined fill level of said buffer memory (16) has been reached;
   e. receiving means (28) for receiving at said trace logging and viewing means (24) from said buffer memory (16) said trace output including said memory addresses of character strings;
   f. search means (S210) for searching through said received trace output for a string address of a synchronization message;

g. calculating means (S220) for calculating a difference between said string address and an offset of a reference string corresponding to said string address in a binary image data of said program; and

h. output means (S250) for outputting at said trace logging and viewing means (24) a readable format of said trace output by using said calculated difference to access said binary image data.

7. The system according to claim 6, wherein said buffer memory is configured as a ring buffer (16).

8. The system according to claim 6 or 7, wherein said buffer memory (16) is adapted to have a size which can be expressed as a power of two.

9. The system according to any one of claims 6 to 8, wherein said address generation means (12) is adapted to access said buffer memory (16) with a write pointer having its most significant bits masked.

10. The system according to claim 9, wherein said address generation means (12) is adapted to increment said write pointer before writing a memory address to said buffer memory (16).

11. The system according to any one of claims 6 to 10, wherein said address generation means (12) is adapted to operate in real-time with said program execution flow.

12. The system according to any one of claims 6 to 11, wherein said predetermined fill level corresponds to one half of the total buffer size.

13. A computer program product comprising code means for producing the steps of method claim 1 when run on a computer device.

**Patentansprüche**

1. Verfahren zum Nachverfolgen von Informationen über einen Programmausführungsfluss, wobei das Verfahren umfasst:

a. Erzeugen von Speicheradressen von Zeichenstrings einer Nachverfolgungsausgabe, die die Informationen über den Programmausführungsfluss bereitstellen, und Speichern dieser in einem Pufferspeicher (16);

b. Überwachen eines Füllstatus des Pufferspeichers (16);

c. Auslösen einer Bereitstellung einer vorbestimmten Anzahl der gespeicherten Speicheradressen an eine Nachverfolgungsaufzeichnungs- und Betrachtungsanwendung (24), wenn ein vorbestimmtes Füllniveau des Pufferspeichers (16) erreicht worden ist,

d. Empfangen, von dem Pufferspeicher (16), einer Nachverfolgungsausgabe, die Speicheradressen von Zeichenstrings beinhaltet, an der Nachverfolgungsaufzeichnungs- und Betrachtungsanwendung (24);

e. Durchsuchen der Nachverfolgungsausgabe nach einer Stringadresse einer Synchronisationsnachricht;

f. Berechnen einer Differenz zwischen der Stringadresse und einem Versatz eines Referenzstrings, der zu der Stringadresse in Binärbilddaten des Programms korrespondiert; und

g. Erhalten eines lesbaren Formats der Nachverfolgungsausgabe an der Nachverfolgungsaufzeichnungs- und Betrachtungsanwendung (24) durch Verwenden der berechneten Differenz, um auf die Binärbilddaten zuzugreifen.

2. Verfahren nach Anspruch 1, des Weiteren erfassend ein Erzeugen der Speicheradressen in Echtzeit mit dem Programmausführungsfluss.

3. Verfahren nach Anspruch 1 oder 2, des Weiteren umfassend ein Bereitstellen der Aufzeichnungs- und Betrachtungsanwendung (24) an einem Hostgerät (20) und Bereitstellen der vorbestimmten Anzahl der gespeicherten Speicheradressen über eine Hardware-Schnittstelle (18, 28) von einem eingebetteten System (10) an dem Hostgerät (20).

4. Verfahren nach einem der vorangegangenen Ansprüche, des Weiteren umfassend ein Speichern der Speicheradressen als Teil von entsprechenden Nachverfolgungsnachrichten, von denen jede einen Nachverfolgungsnachrichtentyp und einen Parameter beinhaltet.

**5.** Verfahren nach Anspruch 1, wobei die Binärbilddaten in einem ausführbaren und einbindbaren Format bereitgestellt sind.

**6.** System zum Nachverfolgen von Informationen über einen Programmausführungsfluss, wobei das System umfasst:

a. einen Pufferspeicher (16);

b. Adresserzeugungsmittel (12) zum Erzeugen von Speicheradressen, die zum Erhalten von Zeichenstrings einer Nachverfolgungsausgabe, die die Informationen über den Programmausführungsfluss bereitstellt, verwendet wird, und zum Speichern der Speicheradressen in dem Pufferspeicher (16);

c. Überwachungsmittel (14) zum Überwachen eines Füllstatus des Pufferspeichers (16);

d. Auslösungsmittel (14) zum Auslösen einer Bereitstellung einer vorbestimmten Anzahl der gespeicherten Speicheradressen an einem Nachverfolgungsaufzeichnungs- und Betrachtungsmittel (24), wenn ein vorbestimmtes Füllniveau des Pufferspeichers (16) erreicht worden ist,

e. Empfangsmittel (28) zum Empfangen, von dem Pufferspeicher (16), der Nachverfolgungsausgabe, die die Speicheradressen von Zeichenstrings beinhaltet, an dem Nachverfolgungsaufzeichnungs- und Betrachtungsmittel (24);

f. Suchmittel (S210) zum Durchsuchen der empfangenen Nachverfolgungsausgabe nach einer Stringadresse einer Synchronisationsnachricht;

g. Berechnungsmittel (S220) zum Berechnen einer Differenz zwischen der Stringadresse und einem Versatz eines Referenzstrings, der zu der Stringadresse in Binärbilddaten des Programms korrespondiert; und

h. Ausgabemittel (S250) zum Ausgeben eines lesbaren Formats der Nachverfolgungsausgabe an dem Nachverfolgungsaufzeichnungs- und Betrachtungsmittel (24) durch Verwenden der berechneten Differenz, um auf die Binärbilddaten zuzugreifen.

**7.** System nach Anspruch 6, wobei der Pufferspeicher als ein Ringpuffer (16) ausgebildet ist.

**8.** System nach Anspruch 6 oder 7, wobei der Pufferspeicher (16) angepasst ist, eine Größe aufzuweisen, die als eine Zweierpotenz ausgedrückt werden kann.

**9.** System nach einem der Ansprüche 6 bis 8, wobei das Adresserzeugungsmittel (12) angepasst ist, auf den Pufferspeicher (16) mit einem Schreibzeiger zuzugreifen, dessen höchstwertigste Bits maskiert sind.

**10.** System nach Anspruch 9, wobei das Adresserzeugungsmittel (12) angepasst ist, den Schreibzeiger zu inkrementieren, bevor eine Speicheradresse in den Pufferspeicher (16) geschrieben wird.

**11.** System nach einem der Ansprüche 6 bis 10, wobei das Adresserzeugungsmittel (12) angepasst ist, in Echtzeit mit dem Programmausführungsfluss zu arbeiten.

**12.** System nach einem der Ansprüche 6 bis 11, wobei das vorbestimmte Füllniveau der Hälfte der Gesamtpuffergröße entspricht.

**13.** Computerprogrammprodukt, umfassend Codiermittel zum Erzeugen der Schritte des Verfahrensanspruchs 1, wenn diese auf einem Computergerät ausgeführt werden.

**Revendications**

**1.** Procédé pour tracer des informations sur un flux d'exécution de programme, le procédé comprenant :

a. créer des adresses de mémoire de chaînes de caractères d'une sortie de traçage, qui procurent les informations sur le flux d'exécution du programme et les mémorisent dans une mémoire (16) tampon ;

b. contrôler un état de remplissage de la mémoire (16) tampon ;

c. exécuter un envoi d'un nombre déterminé à l'avance des adresses de mémoire mémorisées à une application (24) d'acquisition et de visualisation de traçage, lorsqu'un niveau de remplissage déterminé à l'avance de la mémoire (16) tampon a été atteint ;

d. recevoir à l'application (24) d'acquisition et de visualisation de traçage de la mémoire (16) tampon une sortie de traçage incluant des adresses de mémoire de chaînes de caractères ;

e. chercher dans la sortie de traçage une adresse de chaîne d'un message de synchronisation ;

f. calculer une différence entre l'adresse de chaîne et un décalage d'une chaîne de référence correspondant à l'adresse de chaîne dans une donnée d'image binaire du programme et

g. obtenir un format déchiffrable de la sortie de traçage à l'application (24) d'acquisition et de visualisation de traçage en utilisant la différence calculée pour accéder à la donnée d'image binaire.

2. Procédé suivant la revendication 1, comprenant, en outre, créer les adresses de mémoire en temps réel par le flux d'exécution du programme.

3. Procédé suivant la revendication 1 ou 2, comprenant, en outre, procurer l'application (24) d'acquisition et de visualisation à un dispositif (20) hôte et fournir le nombre déterminé à l'avance d'adresses de mémoire mémorisées par l'intermédiaire d'une interface (18, 28) matérielle à partir d'un système (10) incorporé au dispositif (20) hôte.

4. Procédé suivant l'une quelconque des revendications précédentes, comprenant, en outre, mémoriser les adresses de mémoire comme partie de messages de traçage respectifs incluant chacun un type de message de traçage et un paramètre.

5. Procédé suivant la revendication 1, dans lequel la donnée d'image primaire est fournie dans un format exécutable et reliable.

6. Système pour tracer des informations sur un flux d'exécution d'un programme, le système comprenant :

a. une mémoire (16) tampon ;

b. des moyens (12) de création d'adresse pour créer des adresses de mémoire utilisées pour obtenir des chaînes de caractères d'une sortie de traçage, qui procurent les informations sur le flux d'exécution du programme et pour mémoriser les adresses de mémoire dans la mémoire (16) tampon ;

c. des moyens (14) de contrôle pour contrôler un état de remplissage de la mémoire (16) tampon ;

d. des moyens (14) de déclenchement pour déclencher un envoi d'un nombre déterminé à l'avance des adresses de mémoire mémorisées à un moyen (24) d'acquisition et de visualisation de traçage, lorsqu'un niveau de remplissage déterminé à l'avance de la mémoire (16) tampon a été atteint ;

e. des moyens (28) de réception pour recevoir aux moyens (24) d'acquisition et de visualisation de traçage de la mémoire (16) tampon la sortie de traçage incluant les adresses de mémoire de chaînes de caractères ;

f. des moyens (S210) de recherche pour rechercher, dans la sortie de traçage reçue, une adresse de chaîne d'un message de synchronisation ;

g. des moyens (S220) de calcul pour calculer une différence entre l'adresse de chaîne et un décalage d'une chaîne de référence correspondant à l'adresse de chaîne dans une donnée d'image binaire du programme et

h. des moyens (S250) de sortie pour sortir aux moyens (24) d'acquisition et de visualisation de traçage un format déchiffrable de la sortie de traçage en utilisant la différence calculée pour accéder à la donnée d'image binaire.

7. Système suivant la revendication 6, dans lequel la mémoire tampon est configurée sous la forme d'une mémoire (16) en anneau.

8. Système suivant la revendication 6 ou 7, dans lequel la mémoire (16) tampon est adaptée pour avoir une dimension qui peut être exprimée comme une puissance de deux.

9. Système suivant l'une quelconque des revendications 6 à 8, dans lequel les moyens (12) de création d'adresse sont conçus pour accéder à la mémoire (16) tampon par un pointeur d'écriture ayant les bits les plus significatifs masqués.

10. Système suivant la revendication 9, dans lequel les moyens (12) de création d'adresse sont conçus pour incrémenter le pointeur d'écriture avant d'écrire une adresse de mémoire dans la mémoire (16) tampon.

11. Système suivant l'une quelconque des revendications 6 à 10, dans lequel les moyens (12) de création d'adresse sont conçus pour fonctionner en temps réel avec le flux d'exécution du programme.

12. Système suivant l'une quelconque des revendications 6 à 11, dans lequel le niveau de remplissage déterminé à l'avance correspond à une moitié de la dimension totale de la mémoire.

**13.** Produit de programme informatique comprenant des moyens de code pour produire les stades du procédé de la revendication 1 lorsqu'il passe sur un dispositif d'ordinateur.

**Fig. 1**

**Fig. 2**

## Fig. 3

## Fig. 4

```
                    ┌────────────┐
                    │   start    │
                    └────────────┘
                          │                          ╭── S200
           ┌──────────────▼──────────────┐
           │  search for reference string │
           │        in binary file,       │
           │   store offset in refStrOffset│
           └──────────────┬──────────────┘
                          │                          ╭── S210
           ┌──────────────▼──────────────┐
           │  search for sync message in Rx│
           │            buffer,            │
           │  store string address in refStrAddr│
           └──────────────┬──────────────┘
                          │                          ╭── S220
           ┌──────────────▼──────────────┐
           │          calculate:          │
           │  delta = refStrOffset - refStrAddr│
           └──────────────┬──────────────┘
                          │                          ╭── S230
           ┌──────────────▼──────────────┐
           │   read next message from Rx   │
           │            buffer,            │
           │   store string address in strAddr│
           └──────────────┬──────────────┘
                          │                          ╭── S240
           ┌──────────────▼──────────────┐
           │          calculate:          │
           │   strOffset = refAddr + delta │
           └──────────────┬──────────────┘
                          │                          ╭── S250
           ┌──────────────▼──────────────┐
           │    print string stored at     │
           │          strOffset            │
           └──────────────┬──────────────┘
                          │              ╭── S260
                     ◇────▼────◇
                     │   last   │ no
                     │ message  │────────┐
                     │    ?     │        │
                     ◇────┬────◇         │
                          │ yes          │
                    ┌─────▼─────┐        │
                    │  finish   │        │
                    └───────────┘        │
```

# Fig. 5

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10003411 A